(19) Europäisches Patentamt / European Patent Office / Office européen des brevets

(11) **EP 3 733 760 A1**

(12) **EUROPEAN PATENT APPLICATION**
published in accordance with Art. 153(4) EPC


(43) Date of publication:
**04.11.2020 Bulletin 2020/45**

(21) Application number: **18895984.5**

(22) Date of filing: **19.12.2018**

(51) Int Cl.:
***C08L 9/00*** *(2006.01)* ***B60C 1/00*** *(2006.01)*
***C08K 3/36*** *(2006.01)* ***C08L 7/00*** *(2006.01)*

(86) International application number:
**PCT/JP2018/046835**

(87) International publication number:
**WO 2019/131389 (04.07.2019 Gazette 2019/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.12.2017 JP 2017249415**



(71) Applicant: **SUMITOMO RUBBER INDUSTRIES, LTD.**
**Chuo-ku,**
**Kobe-shi,**
**Hyogo 651-0072 (JP)**

(72) Inventors:
- **SAWAKI, Haruko**
**Kobe-shi, Hyogo 651-0072 (JP)**
- **YOSHIOKA, Mikako**
**Kobe-shi, Hyogo 651-0072 (JP)**
- **YOKOYAMA, Yuka**
**Kobe-shi, Hyogo 651-0072 (JP)**

(74) Representative: **TBK**
**Bavariaring 4-6**
**80336 München (DE)**


# (54) TREAD RUBBER COMPOSITION FOR STUDLESS WINTER TIRES


(57) The present invention provides a rubber composition for studless winter tires that provides a balanced improvement of performance on ice and wet grip performance, regardless of temperature, and a studless winter tire including the rubber composition. The present invention relates to a tread rubber composition for studless winter tires, containing: a rubber component including an isoprene-based rubber and a polybutadiene rubber; a water-soluble fine particle; a resin; and a liquid plasticizer, the resin being present in an amount of 5 parts by mass or more, the liquid plasticizer being present in an amount of more than 30 parts by mass, each per 100 parts by mass of the rubber component.


EP 3 733 760 A1

## Description

TECHNICAL FIELD

The present invention relates to a tread rubber composition for studless winter tires and a studless winter tire including the tread rubber composition.

BACKGROUND ART

Studded tires or tire chains have been used for driving on snowy and icy roads. However, since they can cause environmental problems such as dust pollution, studless winter tires have been proposed to replace them. The materials and structure of such studless winter tires are designed to allow the tires to be used on snowy and icy roads with rougher surfaces than normal roads. For example, there have been developed rubber compositions which contain diene rubbers having excellent low-temperature properties, or which contain a large amount of softeners to enhance the softening effect (see, for example, Patent Literature 1).

The performance on ice of studless winter tires may be improved, for example, by increasing the polybutadiene rubber content. However, when too large an amount of polybutadiene rubber is used, the mobility in the rubber increases so that blooming of chemicals can occur. Thus, there is a limit to the increase in polybutadiene rubber content. Another problem is that since the natural rubber content decreases with the increase in polybutadiene rubber content, the rubber has insufficient strength and deteriorated abrasion resistance.

Other proposed techniques include addition of fillers such as zinc oxide whiskers (see Patent Literature 2) or short fibers (see Patent Literature 3). However, these techniques can lead to a decrease in abrasion resistance, and cannot sufficiently improve performance on ice and thus still have room for improvement. As described above, further improvement is desired in order to simultaneously achieve performance on ice and wet grip performance in a wide temperature range while suppressing blooming of chemicals, and further to obtain good low-temperature grip performance on non-icy surfaces and good anti-snow sticking properties at the same time.

CITATION LIST

PATENT LITERATURE

Patent Literature 1: JP 2009-091482 A
Patent Literature 2: JP 2005-53977 A
Patent Literature 3: JP 2002-249619 A

SUMMARY OF INVENTION

TECHNICAL PROBLEM

In this context, the present invention aims to provide a rubber composition for studless winter tires that provides a balanced improvement of performance on ice and wet grip performance, regardless of temperature, and a studless winter tire including the rubber composition.

SOLUTION TO PROBLEM

The present invention relates to a tread rubber composition for studless winter tires, containing: a rubber component including an isoprene-based rubber and a polybutadiene rubber; a water-soluble fine particle; a resin; and a liquid plasticizer, the resin being present in an amount of 5 parts by mass or more, the liquid plasticizer being present in an amount of more than 30 parts by mass, each per 100 parts by mass of the rubber component.

Preferably, the isoprene-based rubber is present in an amount of 20% by mass or more, and the polybutadiene rubber is present in an amount of 20% by mass or more, each based on 100% by mass of the rubber component in the rubber composition, and the rubber composition contains silica in an amount of 50% by mass or more based on a total of 100% by mass of silica and carbon black.

Preferably, the resin is at least one selected from the group consisting of C5 resins, C9 resins, limonene resins, α-pinene resins, β-pinene resins, terpene phenol resins, DCPD resins, styrene resins, α-methylstyrene resins, coumarone resins, indene resins, phenol resins, and rosin resins.

Preferably, the water-soluble fine particle is present in an amount of 25 parts by mass or more per 100 parts by mass of the rubber component.

Preferably, the polybutadiene rubber has a cis content of 90% by mass or higher.

Another aspect of the present invention is a studless winter tire, including a tread formed from the rubber composition.

Preferably, the tread of the studless winter tire has a road contact surface with pores having an average diameter of 0.1 to 100 μm after the following running conditions:

(Running conditions)

The tire is mounted on each wheel of a vehicle (a front-engine, rear-wheel-drive vehicle of 2000 cc displacement made in Japan) and run 100 km on a dry road at ordinary temperature and then 4 km on a snowy or icy road at -10 to -1°C.

Preferably, the studless winter tire has a rate of reduction in pattern noise from before to after the following running conditions, which is enhanced by 2 to 10% as compared with a studless winter tire including a tread formed from a rubber composition having the same formulation except for containing no water-soluble fine particle:

(Running conditions)

The tire is mounted on each wheel of a vehicle (a front-engine, rear-wheel-drive vehicle of 2000 cc displacement made in Japan) and run 100 km on a dry road at ordinary temperature and then 4 km on a snowy or icy road at -10 to -1°C.

ADVANTAGEOUS EFFECTS OF INVENTION

The tread rubber composition for studless winter tires of the present invention contains a rubber component including an isoprene-based rubber and a polybutadiene rubber, a water-soluble fine particle, a resin, and a liquid plasticizer. Further, the resin is present in an amount of 5 parts by mass or more, and the liquid plasticizer is present in an amount of more than 30 parts by mass, each per 100 parts by mass of the rubber component. Such a tread rubber composition provides a balanced improvement of performance on ice and wet grip performance, regardless of temperature.

DESCRIPTION OF EMBODIMENTS

The tread rubber composition for studless winter tires of the present invention contains: a rubber component including an isoprene-based rubber and a polybutadiene rubber (BR); a water-soluble fine particle; a resin; and a liquid plasticizer. Further, the amount of the resin and the amount of the liquid plasticizer are each in a predetermined range. The rubber composition provides a balanced improvement of performance on ice and wet grip performance at both low temperatures (air temperatures of -10 to -6°C) and high temperatures (air temperatures of -5 to 0°C).

Although unclear, the reason for this effect may be described as follows.

Studless winter tires require grip performance on ice that is independent of air temperature. In order to obtain this performance, it is necessary to increase the rigidity of the inside of the tread while softening the surface of the tread. However, simply attaching a soft tread to a material with increased rigidity may result in their separation at the interface. It is considered that such separation may be effectively avoided by using the same formulation in both the inside and surface of the tread.

Thus, a formulation containing an increased amount of a liquid plasticizer, a water-soluble fine particle, and a resin is used in both the inside and surface of the tread to provide a certain rigidity inside the rubber while maintaining flexibility even at low temperatures (air temperatures of -10 to -6°C), thereby improving performance on ice. In the presence of a water film at high temperatures (air temperatures of -5 to 0°C), the water-soluble fine particle dissolves to form pores which produce a water draining effect. Therefore, it is then possible to improve robust performance independent of variations in air temperature. For this reason it is considered that grip performance on ice and wet grip performance can be improved at both high and low temperatures, and the balance between low-temperature performance on ice (performance on ice at air temperatures of -10 to -6°C), high-temperature performance on ice (performance on ice at air temperatures of -5 to 0°C), and wet grip performance can be synergistically improved.

Further, the rubber composition has the following additional effect: it is also excellent in low-temperature grip performance on non-icy surfaces (dry grip performance at air temperatures of 10°C or lower) and anti-snow sticking properties, and the balance between low-temperature performance on ice, high-temperature performance on ice, wet grip performance, low-temperature grip performance on non-icy surfaces, and anti-snow sticking properties can also be synergistically improved.

(Rubber component)

The rubber composition contains a rubber component including an isoprene-based rubber and a polybutadiene rubber (BR) .

Examples of the isoprene-based rubber include natural rubber (NR), polyisoprene rubber (IR), refined NR, modified NR, and modified IR. The NR and IR may be those usually used in the tire industry, such as SIR20, RSS#3, and TSR20 for the NR, and IR2200 for the IR. Examples of the refined NR include deproteinized natural rubber (DPNR) and highly purified natural rubber (UPNR). Examples of the modified NR include epoxidized natural rubber (ENR), hydrogenated natural rubber (HNR), and grafted natural rubber. Examples of the modified IR include epoxidized polyisoprene rubber, hydrogenated polyisoprene rubber, and grafted polyisoprene rubber. These isoprene-based rubbers may be used alone, or two or more of these may be used in combination.

In view of wet grip performance and the balance between low-temperature performance on ice, high-temperature performance on ice, and wet grip performance, the amount of the isoprene-based rubber based on 100% by mass of the rubber component is preferably 20% by mass or more, more preferably 30% by mass or more. The upper limit of the amount is not particularly critical but is preferably 80% by mass or less, more preferably 60% by mass or less, still more preferably 50% by mass or less.

The BR is not particularly limited, and examples include those usually used in the tire industry, such as high-cis BR, BR containing 1,2-syndiotactic polybutadiene crystals (SPB-containing BR), polybutadiene rubber synthesized using rare earth catalysts (rare earth-catalyzed BR), and tin-modified polybutadiene rubber (tin-modified BR) obtained by modification with tin compounds. Commercial products of such BR include products from Ube Industries, Ltd., JSR Corporation, Asahi Kasei Corporation, and Zeon Corporation. These types of BR may be used alone, or two or more of these may be used in combination.

The BR preferably has a cis content of 80% by mass or higher, more preferably 85% by mass or higher, still more preferably 90% by mass or higher, particularly preferably 95% by mass or higher. With such a BR, good low-temperature performance on ice and good high-temperature performance on ice can be obtained.

Herein, the cis content is determined by infrared absorption spectrometry.

In view of low/high-temperature performance on ice and the balance between low-temperature performance on ice, high-temperature performance on ice, and wet grip performance, the amount of the BR based on 100% by mass of the rubber component is preferably 10% by mass or more, more preferably 20% by mass or more, still more preferably 30% by mass or more, further preferably 50% by mass or more. Moreover, the upper limit of the amount is not particularly critical but is preferably 90% by mass or less, more preferably 80% by mass or less, still more preferably 70% by mass or less.

The BR may be either an unmodified BR or a modified BR.

The modified BR may be, for example, a BR having a functional group interactive with a filler such as silica. For example, it may be a chain end-modified BR obtained by modifying at least one chain end of BR with a compound (modifier) having the functional group (i.e., a chain end-modified BR terminated with the functional group); a backbone-modified BR having the functional group in the backbone; a backbone- and chain end-modified BR having the functional group in both the backbone and chain end (e.g., a backbone- and chain end-modified BR in which the backbone has the functional group and at least one chain end is modified with the modifier); or a chain end-modified BR that has been modified (coupled) with a polyfunctional compound having two or more epoxy groups in the molecule so that a hydroxyl or epoxy group is introduced.

Examples of the functional group include amino, amide, silyl, alkoxysilyl, isocyanate, imino, imidazole, urea, ether, carbonyl, oxycarbonyl, mercapto, sulfide, disulfide, sulfonyl, sulfinyl, thiocarbonyl, ammonium, imide, hydrazo, azo, diazo, carboxyl, nitrile, pyridyl, alkoxy, hydroxyl, oxy, and epoxy groups. These functional groups may be substituted. Preferred among these are amino (preferably amino whose hydrogen atom is replaced with a C1-C6 alkyl group), alkoxy (preferably C1-C6 alkoxy), and alkoxysilyl (preferably C1-C6 alkoxysilyl) groups.

The modified BR may suitably be, for example, a BR modified with a compound (modifier) represented by the following formula:

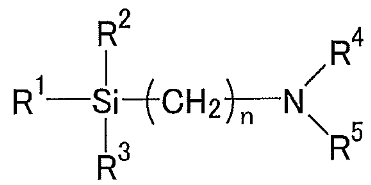

wherein $R^1$, $R^2$, and $R^3$ are the same or different and each represent an alkyl, alkoxy, silyloxy, acetal, carboxyl (-COOH), or mercapto (-SH) group or a derivative thereof; $R^4$ and $R^5$ are the same or different and each represent a hydrogen

atom or an alkyl group, and $R^4$ and $R^5$ may be joined together to form a ring structure with the nitrogen atom; and n represents an integer.

The modified BR modified with a compound (modifier) of the above formula may suitably be, for example, a solution-polymerized polybutadiene rubber (BR) having a polymerizing end (active terminal) modified with a compound of the above formula.

$R^1$, $R^2$, and $R^3$ may each suitably be an alkoxy group, preferably a C1-C8, more preferably C1-C4, alkoxy group. $R^4$ and $R^5$ may each suitably be an alkyl group, preferably a C1-C3 alkyl group. The symbol n is preferably 1 to 5, more preferably 2 to 4, still more preferably 3. When $R^4$ and $R^5$ are joined together to form a ring structure with the nitrogen atom, the ring structure is preferably a 4- to 8-membered ring. The term "alkoxy group" encompasses cycloalkoxy groups (e.g., cyclohexyloxy group) and aryloxy groups (e.g., phenoxy and benzyloxy groups).

Specific examples of the modifier include 2-dimethylaminoethyltrimethoxysilane, 3-dimethylaminopropyltrimethoxysilane, 2-dimethylaminoethyltriethoxysilane, 3-dimethylaminopropyltriethoxysilane, 2-diethylaminoethyltrimethoxysilane, 3-diethylaminopropyltrimethoxysilane, 2-diethylaminoethyltriethoxysilane, and 3-diethylaminopropyltriethoxysilane. Preferred among these are 3-dimethylaminopropyltrimethoxysilane, 3-dimethylaminopropyltriethoxysilane, and 3-diethylaminopropyltrimethoxysilane. These modifiers may be used alone, or two or more of these may be used in combination.

The modified BR may also suitably be a modified BR that has been modified with any of the following compounds (modifiers), including: polyglycidyl ethers of polyhydric alcohols such as ethylene glycol diglycidyl ether, glycerol triglycidyl ether, trimethylolethane triglycidyl ether, and trimethylolpropane triglycidyl ether; polyglycidyl ethers of aromatic compounds having two or more phenol groups such as diglycidylated bisphenol A; polyepoxy compounds such as 1,4-diglycidylbenzene, 1,3,5-triglycidylbenzene, and polyepoxidized liquid polybutadiene; epoxy group-containing tertiary amines such as 4,4'-diglycidyl-diphenylmethylamine and 4,4'-diglycidyl-dibenzylmethylamine; diglycidylamino compounds such as diglycidylaniline, N,N'-diglycidyl-4-glycidyloxyaniline, diglycidylorthotoluidine, tetraglycidyl meta-xylenediamine, tetraglycidylaminodiphenylmethane, tetraglycidyl-p-phenylenediamine, diglycidylaminomethylcyclohexane, and tetraglycidyl-1,3-bisaminomethylcyclohexane;

amino group-containing acid chlorides such as bis(1-methylpropyl)carbamyl chloride, 4-morpholinecarbonyl chloride, 1-pyrrolidinecarbonyl chloride, N,N-dimethylcarbamic acid chloride, and N,N-diethylcarbamic acid chloride; epoxy group-containing silane compounds such as 1,3-bis(glycidyloxypropyl)-tetramethyldisiloxane and (3-glycidyloxypropyl)-pentamethyldisiloxane;

sulfide group-containing silane compounds such as (trimethylsilyl)[3-(trimethoxysilyl)propyl]sulfide, (trimethylsilyl)[3-(triethoxysilyl)propyl]sulfide, (trimethylsilyl)[3-(tripropoxysilyl)propyl]sulfide, (trimethylsilyl)[3-(tributoxysilyl)propyl]sulfide, (trimethylsilyl)[3-(methyldimethoxysilyl)propyl] sulfide, (trimethylsilyl)[3-(methyldiethoxysilyl)propyl]sulfide, (trimethylsilyl)[3-(methyldipropoxysilyl)propyl] sulfide, and (trimethylsilyl)[3-(methyldibutoxysilyl)propyl]sulfide;

N-substituted aziridine compounds such as ethyleneimine and propyleneimine; alkoxysilanes such as methyltriethoxysilane; (thio)benzophenone compounds containing amino and/or substituted amino groups such as 4-N,N-dimethylaminobenzophenone, 4-N,N-di-t-butylaminobenzophenone, 4-N,N-diphenylaminobenzophenone, 4,4'-bis(dimethylamino)benzophenone, 4,4'-bis(diethylamino)benzophenone, 4,4'-bis(diphenylamino)benzophenone, and N,N,N',N'-bis(tetraethylamino)benzophenone; benzaldehyde compounds containing amino and/or substituted amino groups such as 4-N,N-dimethylaminobenzaldehyde, 4-N,N-diphenylaminobenzaldehyde, and 4-N,N-divinylaminobenzaldehyde; N-substituted pyrrolidones such as N-methyl-2-pyrrolidone, N-vinyl-2-pyrrolidone, N-phenyl-2-pyrrolidone, N-t-butyl-2-pyrrolidone, and N-methyl-5-methyl-2-pyrrolidone; N-substituted piperidones such as N-methyl-2-piperidone, N-vinyl-2-piperidone, and N-phenyl-2-piperidone; N-substituted lactams such as N-methyl-ε-caprolactam, N-phenyl-ε-caprolactam, N-methyl-ω-laurilolactam, N-vinyl-ω-laurilolactam, N-methyl-β-propiolactam, and N-phenyl-β-propiolactam; and

N,N-bis(2,3-epoxypropoxy)-aniline, 4,4-methylene-bis(N,N-glycidylaniline), tris(2,3-epoxypropyl)-1,3,5-triazine-2,4,6-triones, N,N-diethylacetamide, N-methylmaleimide, N,N-diethylurea, 1,3-dimethylethylene urea, 1,3-divinylethylene urea, 1,3-diethyl-2-imidazolidinone, 1-methyl-3-ethyl-2-imidazolidinone, 4-N,N-dimethylaminoacetophenone, 4-N,N-diethylaminoacetophenone, 1,3-bis(diphenylamino)-2-propanone, and 1,7-bis(methylethylamino)-4-heptanone. In particular, it is preferably a modified BR modified with an alkoxysilane.

The modification with the compound (modifier) may be carried out by known methods.

The combined amount of the isoprene-based rubber and BR based on 100% by mass of the rubber component in the rubber composition is preferably 30% by mass or more, more preferably 60% by mass or more, still more preferably 80% by mass or more, particularly preferably 100% by mass. A higher combined amount tends to lead to better low-temperature properties, thereby providing desired low/high-temperature performance on ice.

The rubber component of the rubber composition may include additional rubbers as long as the effects are not impaired. Examples of such additional rubbers include diene rubbers such as styrene butadiene rubber (SBR), acrylonitrile butadiene rubber (NBR), chloroprene rubber (CR), butyl rubber (IIR), and styrene-isoprene-butadiene copolymer rubber (SIBR) .

(Water-soluble fine particle)

The water-soluble fine particle may be any fine particle soluble in water. For example, materials having a water solubility of at least 1 g/100 g of water at room temperature (20°C) may be used.
In view of the balance between low-temperature performance on ice, high-temperature performance on ice, and wet grip performance, the water-soluble fine particle preferably has a median particle size (median size, D50) of 1 $\mu$m to 1 mm, more preferably 2 $\mu$m to 800 $\mu$m, still more preferably 2 $\mu$m to 500 $\mu$m.
Herein, the median particle size may be measured by laser diffraction.
The amount of the water-soluble fine particle per 100 parts by mass of the rubber component is preferably 5 parts by mass or more, more preferably 15 parts by mass or more, still more preferably 20 parts by mass or more, particularly preferably 25 parts by mass or more. When the amount is not less than the lower limit, good low/high-temperature performance on ice tends to be obtained. The amount is preferably 100 parts by mass or less, more preferably 70 parts by mass or less, still more preferably 50 parts by mass or less, particularly preferably 40 parts by mass or less. When the amount is not more than the upper limit, good rubber physical properties such as abrasion resistance tend to be obtained.
Examples of the water-soluble fine particle include water-soluble inorganic salts and water-soluble organic substances. These types of water-soluble fine particles may be used alone, or two or more of these may be used in combination.
Examples of the water-soluble inorganic salts include metal sulfates such as magnesium sulfate and potassium sulfate; metal chlorides such as potassium chloride, sodium chloride, calcium chloride, and magnesium chloride; metal hydroxides such as potassium hydroxide and sodium hydroxide; carbonates such as potassium carbonate and sodium carbonate; and phosphates such as sodium hydrogen phosphate and sodium dihydrogen phosphate.
Examples of the water-soluble organic substances include lignin derivatives and saccharides.
Suitable examples of the lignin derivatives include lignin sulfonic acid and lignosulfonates. The lignin derivatives may be prepared either by a sulfite pulping method or a kraft pulping method.
Examples of the lignosulfonates include alkali metal salts, alkaline earth metal salts, ammonium salts, and alcohol amine salts of lignin sulfonic acid. Preferred among these are alkali metal salts (e.g., potassium or sodium salts) and alkaline earth metal salts (e.g., calcium, magnesium, lithium, or barium salts) of lignin sulfonic acid.
The degree of sulfonation of the lignin derivatives is preferably 1.5 to 8.0/$OCH_3$. Such lignin derivatives include a lignin sulfonic acid and/or lignosulfonate in which lignin and/or a degradation product thereof is at least partially substituted with a sulfo group (sulfone group) . The sulfo group of the lignin sulfonic acid may be unionized, or the hydrogen atom of the sulfo group may be replaced by an ion such as a metal ion. The degree of sulfonation is more preferably 3.0 to 6.0/$OCH_3$. When the degree of sulfonation is within the above-mentioned range, good performance on ice tends to be obtained, and the balance between this performance and wet grip performance tends to be improved.
The degree of sulfonation of the lignin derivative particle (lignin derivative that forms the particle) refers to the ratio of introduced sulfo groups calculated by the following equation:

Degree of sulfonation (/$OCH_3$) =
(S (mol) in the sulfone groups in the lignin derivative)/(the methoxyl groups (mol) of the lignin derivative).

The saccharides may be any monosaccharide, oligosaccharide, or polysaccharide having any number of carbon atoms. Examples of such monosaccharides include trioses such as aldotriose and ketotriose; tetroses such as erythrose and threose; pentoses such as xylose and ribose; hexoses such as mannose, allose, altrose, and glucose; and heptoses such as sedoheptulose. Examples of such oligosaccharides include disaccharides such as sucrose and lactose; trisaccharides such as raffinose and melezitose; tetrasaccharides such as acarbose and stachyose; and higher oligosaccharides such as xylooligosaccharide and cellooligosaccharide. Examples of such polysaccharides include glycogen, starch (amylose, amylopectin), cellulose, hemicellulose, dextrin, and glucan.

(Silica)

In view of the balance of the properties, the rubber composition preferably contains silica as filler. Examples of the silica include dry silica (anhydrous silica) and wet silica (hydrous silica) . Among these, wet silica is preferred because it contains a large number of silanol groups. Commercial products of the silica include products from Degussa, Rhodia, Tosoh Silica Corporation, Solvay Japan, and Tokuyama Corporation. These types of silica may be used alone, or two or more of these may be used in combination.

The amount of the silica per 100 parts by mass of the rubber component is preferably 25 parts by mass or more, more preferably 30 parts by mass or more, still more preferably 50 parts by mass or more, further preferably 55 parts by mass or more, particularly preferably 60 parts by mass or more. When the amount is not less than the lower limit, good wet grip performance and good handling stability tend to be obtained. The upper limit of the amount is not particularly critical but is preferably 300 parts by mass or less, more preferably 200 parts by mass or less, still more preferably 170 parts by mass or less, particularly preferably 100 parts by mass or less, most preferably 80 parts by mass or less. When the amount is not more than the upper limit, good dispersibility tends to be obtained.

The silica preferably has a nitrogen adsorption specific surface area ($N_2SA$) of 70 $m^2/g$ or more, more preferably 140 $m^2/g$ or more, still more preferably 160 $m^2/g$ or more. When the $N_2SA$ is not less than the lower limit, good wet grip performance and good tensile strength tend to be obtained. Moreover, the upper limit of the $N_2SA$ of the silica is not particularly critical but is preferably 500 $m^2/g$ or less, more preferably 300 $m^2/g$ or less, still more preferably 250 $m^2/g$ or less. When the $N_2SA$ is not more than the upper limit, good dispersibility tends to be obtained.

The $N_2SA$ of the silica is measured by the BET method in accordance with ASTM D3037-93.

In view of the balance between low/high-temperature performance on ice and wet grip performance, the amount of the silica based on a total of 100% by mass of silica and carbon black in the rubber composition is preferably 50% by mass or more, more preferably 80% by mass or more, still more preferably 90% by mass or more.

(Silane coupling agent)

The rubber composition containing silica preferably also contains a silane coupling agent.

Non-limiting examples of the silane coupling agent include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyl tetrasulfide, 2-triethoxysilylethyl-N,N-dimethylthiocarbamoyl tetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z both available from Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. Commercial products of such silane coupling agents include products from Degussa, Momentive, Shin-Etsu Silicone, Tokyo Chemical Industry Co., Ltd., AZmax. Co., and Dow Corning Toray Co., Ltd. These silane coupling agents may be used alone, or two or more of these may be used in combination.

The amount of the silane coupling agent per 100 parts by mass of the silica is preferably 3 parts by mass or more, more preferably 6 parts by mass or more. When the amount is 3 parts by mass or more, good properties such as tensile strength tend to be obtained. The amount is also preferably 20 parts by mass or less, more preferably 15 parts by mass or less. An amount of 20 parts by mass or less tends to provide an effect commensurate with the amount.

(Carbon black)

In view of the balance of the properties, the rubber composition preferably contains carbon black as filler. Non-limiting examples of the carbon black include N134, N110, N220, N234, N219, N339, N330, N326, N351, N550, and N762. Commercial products of such carbon black include products from Asahi Carbon Co., Ltd., Cabot Japan K.K., Tokai Carbon Co., Ltd. , Mitsubishi Chemical Corporation, Lion Corporation, NSCC Carbon Co., Ltd., and Columbia Carbon. These types of carbon black may be used alone, or two or more of these may be used in combination.

The amount of the carbon black per 100 parts by mass of the rubber component is preferably 1 part by mass or more, more preferably 3 parts by mass or more. When the amount is not less than the lower limit, good properties such as abrasion resistance and low/high-temperature performance on ice (grip performance on ice) tend to be obtained. The amount is also preferably 10 parts by mass or less, more preferably 7 parts by mass or less. When the amount is not more than the upper limit, the rubber composition tends to provide good processability.

The carbon black preferably has a nitrogen adsorption specific surface area ($N_2SA$) of 50 $m^2/g$ or more, more preferably 80 $m^2/g$ or more, still more preferably 100 $m^2/g$ or more. A $N_2SA$ of not less than the lower limit tends to lead to good abrasion resistance and good low/high-temperature grip performance on ice. The $N_2SA$ is also preferably 200 $m^2/g$ or less, more preferably 150 $m^2/g$ or less, still more preferably 130 $m^2/g$ or less. Carbon black having a $N_2SA$ of not more than the upper limit tends to disperse well.

The nitrogen adsorption specific surface area of the carbon black is determined in accordance with JIS K6217-2:

2001.

In view of the balance between low/high-temperature performance on ice and wet grip performance, the combined amount of the silica and carbon black per 100 parts by mass of the rubber component in the rubber composition is preferably 50 to 120 parts by mass, and is more preferably 55 parts by mass or more, still more preferably 60 parts by mass or more, but more preferably 100 parts by mass or less, still more preferably 80 parts by mass or less.

(Liquid plasticizer)

The rubber composition contains a liquid plasticizer in an amount of more than 30 parts by mass per 100 parts by mass of the rubber component. With such an amount, excellent low/high-temperature performance on ice and excellent wet grip performance can be obtained. The amount of the liquid plasticizer is preferably 33 parts by mass or more, more preferably 35 parts by mass or more. The upper limit of the amount is not particularly critical. In view of properties such as abrasion resistance, it is preferably 100 parts by mass or less, more preferably 70 parts by mass or less, still more preferably 55 parts by mass or less.

The liquid plasticizer may be any plasticizer that is liquid at 25°C. Examples include oils, liquid resins, and liquid diene polymers. These liquid plasticizers may be used alone, or two or more of these may be used in combination.

Examples of the oils include process oils and plant oils, and mixtures thereof. Examples of the process oils include paraffinic process oils, aromatic process oils, and naphthenic process oils. Examples of the plant oils include castor oil, cotton seed oil, linseed oil, rapeseed oil, soybean oil, palm oil, coconut oil, peanut oil, rosin, pine oil, pine tar, tall oil, corn oil, rice oil, safflower oil, sesame oil, olive oil, sunflower oil, palm kernel oil, camellia oil, jojoba oil, macadamia nut oil, and tung oil. Commercial products of such oils include products from Idemitsu Kosan Co., Ltd., Sankyo Yuka Kogyo K.K., Japan Energy Corporation, Olisoy, H&R, Hokoku Corporation, Showa Shell Sekiyu K.K., and Fuji Kosan Co., Ltd. Preferred among these are process oils.

Examples of the liquid resins include resins that are liquid at 25°C, such as terpene resins (including terpene phenol resins and aromatic modified terpene resins), rosin resins, styrene resins, C5 resins, C5/C9 resins, coumarone-indene resins (including resins based on coumarone or indene alone), olefin resins, polyurethane resins, and acrylic resins.

Examples of the liquid diene polymers include diene polymers that are liquid at 25°C, such as liquid styrene-butadiene copolymers (liquid SBR), liquid polybutadiene polymers (liquid BR), liquid polyisoprene polymers (liquid IR), liquid styrene-isoprene copolymers (liquid SIR), liquid styrene-butadiene-styrene block copolymers (liquid SBS block polymers), and liquid styrene-isoprene-styrene block copolymers (liquid SIS block polymers) . The chain end or backbone of these polymers may be modified with a polar group.

(Resin)

The rubber composition contains a resin (solid resin: resin that is solid at room temperature (25°C)).

The resin (solid resin) preferably has a softening point of 60°C or higher. With such a resin, the effects of the present invention can be more suitably achieved. The softening point is more preferably 70°C or higher, still more preferably 80°C or higher, but is preferably 150°C or lower, more preferably 140°C or lower, still more preferably 130°C or lower.

The softening point of the resin as used herein is determined in accordance with JIS K 6220-1:2001 using a ring and ball softening point measuring apparatus and defined as the temperature at which the ball drops down.

Examples of the resin (solid resin) include aromatic vinyl polymers, coumarone-indene resins, coumarone resins, indene resins, phenol resins, rosin resins, petroleum resins, terpene resins, and acrylic resins. Commercial products of such resins include products from Maruzen Petrochemical Co., Ltd., Sumitomo Bakelite Co., Ltd., Yasuhara Chemical Co., Ltd. , Tosoh Corporation, Rutgers Chemicals, BASF, Arizona Chemical, Nitto Chemical Co., Ltd., Nippon Shokubai Co., Ltd., JX energy, Arakawa Chemical Industries, Ltd., Taoka Chemical Co., Ltd., and Toagosei Co., Ltd. These resins may be used alone, or two or more of these may be used in combination. In order to more suitably achieve the effects of the present invention, aromatic vinyl polymers, coumarone-indene resins, coumarone resins, indene resins, phenol resins, rosin resins, petroleum resins, and terpene resins are preferred among these, with aromatic vinyl polymers, coumarone-indene resins, terpene resins, and rosin resins being more preferred.

The term "aromatic vinyl polymer" refers to a resin produced by polymerizing $\alpha$-methylstyrene and/or styrene. Examples include styrene homopolymers (styrene resins), $\alpha$-methylstyrene homopolymers (a-methylstyrene resins), copolymers of $\alpha$-methylstyrene and styrene, and copolymers of styrene and other monomers.

The term "coumarone-indene resin" refers to a resin that contains coumarone and indene as main monomer components forming the skeleton (backbone) of the resin. Examples of monomer components which may be contained in the skeleton other than coumarone and indene include styrene, $\alpha$-methylstyrene, methylindene, and vinyltoluene.

The term "coumarone resin" refers to a resin that contains coumarone as a main monomer component forming

the skeleton (backbone) of the resin.

The term "indene resin" refers to a resin that contains indene as a main monomer component forming the skeleton (backbone) of the resin.

Examples of the phenol resins include those produced by reacting phenol with aldehydes such as formaldehyde, acetaldehyde, or furfural in the presence of acid or alkali catalysts. In particular, phenol resins produced by reactions using acid catalysts (e.g., novolac-type phenol resins) are preferred.

Examples of the rosin resins include rosin-based resins such as typically natural rosins, polymerized rosins, modified rosins, esterified compounds thereof, and hydrogenated products thereof.

Examples of the petroleum resins include C5 resins, C9 resins, C5/C9 resins, and dicyclopentadiene (DCPD) resins.

Examples of the terpene resins include polyterpene resins produced by polymerization of terpene compounds, and aromatic modified terpene resins produced by polymerization of terpene compounds and aromatic compounds. Hydrogenated products of the foregoing resins may also be used.

The term "polyterpene resin" refers to a resin produced by polymerizing a terpene compound. The term "terpene compound" refers to a hydrocarbon having a composition represented by $(C_5H_8)_n$ or an oxygen-containing derivative thereof, each of which has a terpene backbone and is classified as, for example, a monoterpene ($C_{10}H_{16}$), sesquiterpene ($C_{15}H_{24}$), or diterpene ($C_{20}H_{32}$). Examples of such terpene compounds include $\alpha$-pinene, $\beta$-pinene, dipentene, limonene, myrcene, alloocimene, ocimene, $\alpha$-phellandrene, $\alpha$-terpinene, $\gamma$-terpinene, terpinolene, 1,8-cineole, 1,4-cineole, $\alpha$-terpineol, $\beta$-terpineol, and $\gamma$-terpineol.

Examples of the polyterpene resins include resins made from the above-mentioned terpene compounds, such as pinene resins, limonene resins, dipentene resins, and pinene-limonene resins. Preferred among these are pinene resins because their polymerization reaction is simple, and they are made from natural pine resin and therefore inexpensive. Pinene resins, which usually contain two isomers, i.e., $\alpha$-pinene and $\beta$-pinene, are classified into $\beta$-pinene resins mainly containing $\beta$-pinene and $\alpha$-pinene resins mainly containing $\alpha$-pinene, depending on the differences in component proportions.

Examples of the aromatic modified terpene resins include terpene phenol resins made from the above-mentioned terpene compounds and phenolic compounds, and terpene styrene resins made from the above-mentioned terpene compounds and styrene compounds. Terpene phenol styrene resins made from the terpene compounds, phenolic compounds, and styrene compounds may also be used. Examples of the phenolic compounds include phenol, bisphenol A, cresol, and xylenol. Examples of the styrene compounds include styrene and $\alpha$-methylstyrene.

Examples of the acrylic resins include styrene acrylic resins such as styrene acrylic resins containing carboxyl groups which are produced by copolymerization of aromatic vinyl and acrylic monomer components. In particular, solvent-free, carboxyl group-containing styrene acrylic resins are suitable.

The solvent-free, carboxyl group-containing styrene acrylic resins may be (meth)acrylic resins (polymers) synthesized by high temperature continuous polymerization (high temperature continuous bulk polymerization as described in, for example, US Patent No. 4,414,370, JP S59-6207 A, JP H5-58005 B, JP H1-313522 A, US Patent No. 5,010,166, and annual research report TREND 2000 issued by Toagosei Co., Ltd., vol. 3, pp. 42-45) using no or minimal amounts of auxiliary raw materials such as polymerization initiators, chain transfer agents, and organic solvents. Herein, the term "(meth)acrylic" means methacrylic and acrylic.

Examples of the acrylic monomer components of the acrylic resins include (meth)acrylic acids and (meth)acrylic acid derivatives such as (meth)acrylic acid esters (e.g., alkyl esters, aryl esters, and aralkyl esters such as 2-ethylhexyl acrylate), (meth)acrylamides, and (meth)acrylamide derivatives. The term "(meth)acrylic acid" is a general term for acrylic acid and methacrylic acid.

Examples of the aromatic vinyl monomer components of the acrylic resins include aromatic vinyls such as styrene, $\alpha$-methylstyrene, vinyltoluene, vinylnaphthalene, divinylbenzene, trivinylbenzene, and divinylnaphthalene.

In addition to the (meth) acrylic acids or (meth)acrylic acid derivatives, and aromatic vinyls, other monomer components may also be used as monomer components to form the acrylic resins.

In view of the balance between low-temperature performance on ice, high-temperature performance on ice, and wet grip performance, the resin is preferably at least one selected from the group consisting of C5 resins, C9 resins, limonene resins, $\alpha$-pinene resins, $\beta$-pinene resins, terpene phenol resins, DCPD resins, styrene resins, $\alpha$-methylstyrene resins, coumarone resins, indene resins, phenol resins, and rosin resins, among others. Moreover, in view of anti-snow sticking properties, the resin is particularly preferably a limonene resin, $\alpha$-pinene resin, $\beta$-pinene resin, terpene phenol resin, or DCPD resin.

The amount of the resin per 100 parts by mass of the rubber component in the rubber composition is 5 parts by mass or more. With such an amount, excellent wet grip performance, low-temperature performance on ice, and high-temperature performance on ice, and further good low-temperature grip performance on non-icy surfaces and good anti-snow sticking properties can be obtained. The amount is preferably 7 parts by mass or more, more preferably 10 parts by mass or more, still more preferably 15 parts by mass or more, particularly preferably 17 parts by mass or more. The

upper limit of the amount is not particularly critical. In view of properties such as abrasion resistance, it is preferably 50 parts by mass or less, more preferably 40 parts by mass or less, still more preferably 30 parts by mass or less, particularly preferably 25 parts by mass or less.

In view of the balance between low-temperature performance on ice, high-temperature performance on ice, and wet grip performance, the combined amount of the resin (solid resin) and liquid plasticizer per 100 parts by mass of the rubber component in the rubber composition is preferably 43 parts by mass or more, more preferably 45 parts by mass or more, still more preferably 50 parts by mass or more, particularly preferably 55 parts by mass or more. The upper limit of the combined amount is not particularly critical. In view of properties such as abrasion resistance, it is preferably 100 parts by mass or less, more preferably 70 parts by mass or less, still more preferably 65 parts by mass or less.

(Other materials)

In view of properties such as crack resistance and ozone resistance, the rubber composition preferably contains an antioxidant.

Non-limiting examples of the antioxidant include: naphthylamine antioxidants such as phenyl-α-naphthylamine; diphenylamine antioxidants such as octylated diphenylamine and 4,4'-bis(α,α'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline antioxidants such as 2,2,4-trimethyl-1,2-dihydroquinoline polymer; monophenolic antioxidants such as 2, 6-di-t-butyl-4-methylphenol and styrenated phenol; and bis-, tris-, or polyphenolic antioxidants such as tetrakis-[methylene-3-(3',5'-di-t-butyl-4'-hydroxyphenyl)-propionate]methane. Among these, p-phenylenediamine antioxidants or quinoline antioxidants are preferred, with N-(1,3-dimethylbutyl)-N'-phenyl-p-phenylenediamine or 2,2,4-trimethyl-1,2-dihydroquinoline polymer being more preferred. Commercial products of such antioxidants include products from Seiko Chemical Co., Ltd., Sumitomo Chemical Co., Ltd., Ouchi Shinko Chemical Industrial Co., Ltd., and Flexsys.

The amount of the antioxidant per 100 parts by mass of the rubber component is preferably 0.2 parts by mass or more, more preferably 0.5 parts by mass or more. When the amount is not less than the lower limit, sufficient ozone resistance tends to be obtained. The amount is preferably 7.0 parts by mass or less, more preferably 4.0 parts by mass or less. When the amount is not more than the upper limit, good tire appearance tends to be obtained.

The rubber composition preferably contains stearic acid. In view of the balance of the properties, the amount of the stearic acid per 100 parts by mass of the rubber component is preferably 0.5 to 10 parts by mass, more preferably 0.5 to 5 parts by mass.

The stearic acid may be a conventional one, and examples include products from NOF Corporation, Kao Corporation, FUJIFILM Wako Pure Chemical Corporation, and Chiba Fatty Acid Co., Ltd.

The rubber composition preferably contains zinc oxide. In view of the balance of the properties, the amount of the zinc oxide per 100 parts by mass of the rubber component is preferably 0.5 to 10 parts by mass, more preferably 1 to 5 parts by mass.

The zinc oxide may be a conventional one, and examples include products from Mitsui Mining & Smelting Co., Ltd., Toho Zinc Co., Ltd., HakusuiTech Co., Ltd., Seido Chemical Industry Co., Ltd., and Sakai Chemical Industry Co., Ltd.

The rubber composition may contain a wax. Non-limiting examples of the wax include petroleum waxes, natural waxes, and synthetic waxes produced by purifying or chemically treating a plurality of waxes. These waxes may be used alone, or two or more of these may be used in combination.

Examples of the petroleum waxes include paraffin waxes and microcrystalline waxes. The natural waxes may be any wax derived from non-petroleum resources, and examples include plant waxes such as candelilla wax, carnauba wax, Japan wax, rice wax, and jojoba wax; animal waxes such as beeswax, lanolin, and spermaceti; mineral waxes such as ozokerite, ceresin, and petrolatum; and purified products of the foregoing. Commercial products of such waxes include products from Ouchi Shinko Chemical Industrial Co., Ltd., Nippon Seiro Co., Ltd., and Seiko Chemical Co., Ltd. The amount of the wax may be appropriately selected in view of ozone resistance and cost.

The rubber composition preferably contains sulfur in order to moderately crosslink the polymer chains to provide a good balance of the properties.

The amount of the sulfur per 100 parts by mass of the rubber component is preferably 0.1 parts by mass or more, more preferably 0.5 parts by mass or more, still more preferably 0.7 parts by mass or more. The amount is preferably 6.0 parts by mass or less, more preferably 4.0 parts by mass or less, still more preferably 3.0 parts by mass or less. When the amount is within the above-mentioned range, a good balance of the properties tends to be obtained.

Examples of the sulfur include those usually used in the rubber industry, such as powdered sulfur, precipitated sulfur, colloidal sulfur, insoluble sulfur, highly dispersible sulfur, and soluble sulfur. Commercial products of such sulfur include products from Tsurumi Chemical Industry Co., Ltd., Karuizawa Sulfur Co., Ltd., Shikoku Chemicals Corporation, Flexsys, Nippon Kanryu Industry Co., Ltd., and Hosoi Chemical Industry Co., Ltd. These types of sulfur may be used

alone, or two or more of these may be used in combination.

The rubber composition preferably contains a vulcanization accelerator.

The amount of the vulcanization accelerator is not particularly critical and may be arbitrarily selected depending on the desired cure rate or crosslink density. The amount is usually 0.3 to 10 parts by mass, preferably 0.5 to 7 parts by mass per 100 parts by mass of the rubber component.

Any type of vulcanization accelerator may be used including those usually used. Examples of the vulcanization accelerator include thiazole vulcanization accelerators such as 2-mercaptobenzothiazole, di-2-benzothiazolyl disulfide, and N-cyclohexyl-2-benzothiazylsulfenamide; thiuram vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide vulcanization accelerators such as N-cyclohexyl-2-benzothiazole sulfenamide, N-t-butyl-2-benzothiazolyl sulfenamide, N-oxyethylene-2-benzothiazole sulfenamide, N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. These vulcanization accelerators may be used alone, or two or more of these may be used in combination. In view of the balance of the properties, sulfenamide vulcanization accelerators or guanidine vulcanization accelerators are preferred among these.

In addition to the above-mentioned components, the rubber composition may appropriately contain other compounding agents usually used in the tire industry such as release agents.

The rubber composition may be prepared by known methods. For example, it may be prepared by kneading the components using a rubber kneading machine such as an open roll mill or Banbury mixer, and vulcanizing the kneaded mixture.

The kneading conditions are as follows. In a base kneading step that includes kneading additives other than vulcanizing agents and vulcanization accelerators, the kneading temperature is usually 50 to 200°C, preferably 80 to 190°C, and the kneading time is usually 30 seconds to 30 minutes, preferably one minute to 30 minutes. In a final kneading step that includes kneading vulcanizing agents and vulcanization accelerators, the kneading temperature is usually 100°C or lower, preferably from room temperature to 80°C. The composition obtained after kneading vulcanizing agents and vulcanization accelerators is usually vulcanized by, for example, press vulcanization. The vulcanization temperature is usually 120 to 200°C, preferably 140 to 180°C.

The rubber composition may be prepared by common methods . Specifically, for example, it may be prepared by kneading the components in a kneading machine such as a Banbury mixer, kneader, or open roll mill, and vulcanizing the kneaded mixture. The rubber composition is for use in treads (monolayer treads, cap treads of multilayer treads) of studless winter tires.

(Studless winter tire)

The studless winter tire of the present invention may be produced from the rubber composition by usual methods. Specifically, the unvulcanized rubber composition containing the above-mentioned components may be extruded into the shape of a tread (e.g., cap tread) and assembled with other tire components in a tire building machine in a usual manner to form an unvulcanized tire, which may then be heated and pressurized in a vulcanizer to produce a studless winter tire. The studless winter tire of the present invention is suitable for passenger vehicles.

The tread of the studless winter tire preferably has a road contact surface with pores having an average diameter of 0.1 to 100 μm after the running conditions indicated below. When a studless winter tire including a tread formed from the rubber composition of the present invention has such a feature, the studless winter tire can achieve improved performance on ice and reduced noise while maintaining handling stability.

(Running conditions)

The tire is mounted on each wheel of a vehicle (a front-engine, rear-wheel-drive vehicle of 2000 cc displacement made in Japan) and run 100 km on a dry road at ordinary temperature and then 4 km on a snowy or icy road at -10 to -1°C.

The average diameter of the pores is preferably 0.1 to 100 pm, but in view of handling stability, performance on ice, and reduced noise it is more preferably 1 μm or more, still more preferably 10 μm or more, but more preferably 80 μm or less, still more preferably 70 μm or less.

Herein, the average diameter of the pores can be determined by scanning electron microscopy (SEM). Specifically, the pores may be photographed with a scanning electron microscope and then the diameter of each pore may be determined as the spherical diameter when it has a spherical shape, the minor diameter when it has a needle- or rod-like shape, or the average diameter through the center when it has an irregular shape. The average of the diameters of 100 pores may be defined as the average diameter.

The studless winter tire preferably has a rate of reduction in pattern noise from before to after the running conditions indicated below, which is enhanced by 2 to 10% as compared with a studless winter tire including a tread

formed from a rubber composition having the same formulation except for containing no water-soluble fine particle. In other words, the rate of reduction in pattern noise, which indicates how much the pattern noise after the running conditions below is reduced compared to the pattern noise before running, is preferably enhanced by 2 to 10% as compared to the rate of reduction in pattern noise of a studless winter tire including a tread formed from a rubber composition having the same formulation except for containing no water-soluble fine particle.

(Running conditions)

The tire is mounted on each wheel of a vehicle (a front-engine, rear-wheel-drive vehicle of 2000 cc displacement made in Japan) and run 100 km on a dry road at ordinary temperature and then 4 km on a snowy or icy road at -10 to -1°C.
Herein, the pattern noise can be determined as follows. The studless winter tire may be mounted on each wheel of a vehicle (a front-engine, rear-wheel-drive vehicle of 2000 cc displacement made in Japan, rim: 7.5 J × 17, internal pressure: 220 kPa) and run on a road noise measuring road (icy road) at 60 km/h. The noise level inside the vehicle in the driver's window-side ear position during the running may be measured to determine the sound pressure level at a narrow-band peak of cavity resonance noise around 500 Hz.

EXAMPLES

The present invention will be specifically described with reference to, but not limited to, examples.
The chemicals used in examples and comparative examples are listed below.
Natural rubber (NR): RSS#3
Polybutadiene rubber (BR): BR150B available from Ube Industries, Ltd. (cis content: 95% by mass or higher)
Carbon black: Seast N220 available from Mitsubishi Chemical Corporation
Silica: Ultrasil VN3 available from Evonik Degussa ($N_2SA$: 172 $m^2/g$)
Silane coupling agent: Si266 available from Evonik Degussa
Water-soluble fine particle 1: MN-00 available from Umai Chemical Co., Ltd. (magnesium sulfate, median particle size (median size): 75 μm)
Water-soluble fine particle 2: USN-00 available from Umai Chemical Co., Ltd. (extremely fine particle magnesium sulfate, median particle size (median size): 3 μm)
Water-soluble fine particle 3: sodium lignin sulfonate available from Tokyo Chemical Industry Co., Ltd. (median particle size (median size): 100 μm)
Wax: Ozoace wax available from Nippon Seiro Co., Ltd.
Antioxidant: NOCRAC 6C available from Ouchi Shinko Chemical Industrial Co., Ltd.
Oil: PS-32 (mineral oil) available from Idemitsu Kosan Co., Ltd.
Resin (1): styrene polymer resin (YS resin SX100 available from Yasuhara Chemical Co., Ltd., softening point: 100±5°C)
Resin (2): polyterpene resin (YS resin PX1250 available from Yasuhara Chemical Co., Ltd., softening point: 125±5°C)
Stearic acid: KIRI available from NOF Corporation
Zinc oxide: zinc oxide #2 available from Mitsui Mining & Smelting Co., Ltd.
Sulfur: powdered sulfur available from Tsurumi Chemical Industry Co., Ltd.
Vulcanization accelerator: NOCCELER NS available from Ouchi Shinko Chemical Industrial Co., Ltd.

[Measurement of median particle size (median size) of water-soluble fine particle]

The median particle size was measured by laser diffraction using SALD-2000J available from Shimadzu Corporation (the following measurement procedure was used).

<Measurement procedure>

The water-soluble fine particles were dispersed in a solution mixture of a dispersion solvent (toluene) and a dispersant (a 10% by mass solution of sodium di(2-ethylhexyl) sulfosuccinate in toluene) at room temperature. The dispersion was stirred for five minutes under ultrasonic irradiation to prepare a test solution. The test solution was transferred to a batch cell, and one minute later the measurement was performed (refractive index: 1.70-0.20 i).

<Examples (Ex.) and Comparative Examples (Comp. Ex.)>

Using the recipe shown in Table 1 or 2, a 1.7 L Banbury mixer was charged with the natural rubber and silica and with the polybutadiene rubber and silica, and after each addition they were kneaded at 150°C for three minutes to give a kneaded mixture (masterbatch). To the masterbatch were added the materials other than the sulfur and vulcanization accelerator, and they were kneaded at 150°C for two minutes to give a kneaded mixture. Then, the sulfur and vulcanization accelerator were added, and they were kneaded using an open roll mill at 80°C for five minutes to obtain an unvulcanized rubber composition.

The unvulcanized rubber composition was press-vulcanized at 170°C for 12 minutes using a 0.5 mm-thick mold to obtain a vulcanized rubber composition.

Separately, the unvulcanized rubber compositions prepared as above were each formed into a cap tread shape and assembled with other tire components, followed by vulcanization at 170°C for 15 minutes to prepare a test studless winter tire (tire size: 195/65R15).

The vulcanized rubber compositions and test studless winter tires prepared as above were stored at room temperature in a dark place for three months and then evaluated as follows. Tables 1 and 2 show the results.

<Low-temperature grip performance on ice>

The vehicle performance on ice of the test studless winter tires was evaluated under the following conditions. The test site was the Nayoro test track of Sumitomo Rubber Industries, Ltd. in Hokkaido, Japan. The air temperature was -10 to -6°C. The test tires were mounted on a front-engine, rear-wheel-drive car of 2000 cc displacement made in Japan. The stopping distance on ice was measured which was the distance required for the car to stop after the brakes that lock up were applied at 30 km/h. The stopping distances are expressed as an index relative to Comparative Example 1 using the equation below. A higher index indicates better low-temperature performance on ice.

$$(\text{Low-temperature grip performance on ice}) = (\text{Brake stopping distance of Comparative Example 1})/(\text{Stopping distance of each formulation example}) \times 100$$

<High-temperature grip performance on ice>

The vehicle performance on ice of the test studless winter tires was evaluated under the following conditions. The test site was the Nayoro test track of Sumitomo Rubber Industries, Ltd. in Hokkaido, Japan. The air temperature was -5 to 0°C. The test tires were mounted on a front-engine, rear-wheel-drive car of 2000 cc displacement made in Japan. The stopping distance on ice was measured which was the distance required for the car to stop after the brakes that lock up were applied at 30 km/h. The stopping distances are expressed as an index relative to Comparative Example 1 using the equation below. A higher index indicates better high-temperature performance on ice.

$$(\text{High-temperature grip performance on ice}) = (\text{Brake stopping distance of Comparative Example 1})/(\text{Stopping distance of each formulation example}) \times 100$$

<Wet grip performance>

The test studless winter tires were mounted on a front-engine, rear-wheel-drive car of 2000 cc displacement made in Japan. The braking distance of the car with an initial speed of 100 km/h under wet road conditions was determined and expressed as an index using the equation below, with Comparative Example 1 set equal to 100. A higher index indicates better wet grip performance.

$$(\text{Wet grip performance index}) = (\text{Braking distance of Comparative Example 1})/(\text{Braking distance of each formulation example}) \times 100$$

<Low-temperature grip performance on non-icy surfaces>

The test studless winter tires were mounted on a front-engine, rear-wheel-drive car of 2000 cc displacement made in Japan. The braking distance of the car with an initial speed of 100 km/h under dry road conditions at an air temperature of 10°C or lower was determined and expressed as an index using the equation below, with Comparative Example 1 set equal to 100. A higher index indicates better low-temperature grip performance on non-icy surfaces (low-temperature grip performance on dry, non-icy roads).

(Index of low-temperature grip performance on non-icy surfaces) = (Braking distance of Comparative Example 1)/(Braking distance of each formulation example) × 100

<Anti-snow sticking properties>

The test studless winter tires were mounted on a front-engine, rear-wheel-drive car of 2000 cc displacement made in Japan. After the car travelled 5 km on snowy roads, the tires were visually observed for snow sticking to them and rated relative to Comparative Example 1 given a rating of 100. A higher rating means less snow sticking and therefore better anti-snow sticking properties.

<Performance on ice>

The vehicle performance on ice of the test studless winter tires was evaluated under the following conditions. The test site was the Nayoro test track of Sumitomo Rubber Industries, Ltd. in Hokkaido, Japan. The air temperature was -5 to 0°C. The test tires were mounted on a front-engine, rear-wheel-drive car of 2000 cc displacement made in Japan. The stopping distance on ice was measured which was the distance required for the car to stop after the brakes that lock up were applied at 30 km/h. The stopping distances are expressed as an index relative to Comparative Example 11 using the equation below. A higher index indicates better performance on ice.

(Performance on ice) = (Brake stopping distance of Comparative Example 11)/(Stopping distance of each formulation example) × 100

<Pattern noise-reducing properties>

We calculated the rate of reduction in pattern noise after the running conditions indicated below when compared to before running. The thus calculated values (rates of reduction in pattern noise) are expressed as an index according to the equation below using Comparative Example 11 as a reference. A higher index indicates better pattern noise-reducing properties.

(Pattern noise-reducing properties) = (Rate of reduction in pattern noise of each formulation example)/(Rate of reduction in pattern noise of Comparative Example 11) × 100

(Running conditions)

The test studless winter tire of each example was mounted on each wheel of a vehicle (a front-engine, rear-wheel-drive vehicle of 2000 cc displacement made in Japan, rim: 7.5 J × 17, internal pressure: 220 kPa) and run 100 km on a dry road at ordinary temperature and then 4 km on a snowy or icy road at -10 to -1°C. The test site was the Okayama test track (dry road).

The pattern noise was determined by measuring the noise level inside the vehicle in the driver's window-side ear position during running at 60 km/h to determine the sound pressure level at a narrow-band peak of cavity resonance noise around 500 Hz.

<Handling stability>

The test studless winter tire of each example was mounted on a front-engine, rear-wheel-drive car of 2000 cc displacement made in Japan and a test driver drove the car on a dry asphalt test track with a road surface temperature of 25°C. Then, the test driver comprehensively evaluated steering response to small steering angle changes and response

to sudden lane changes using the result of Comparative Example 11 taken as 100. A higher value indicates better handling stability.

[Table 1]

| | Ex. 1 | Ex. 2 | Ex. 3 | Ex. 4 | Ex. 5 | Ex. 6 | Ex. 7 | Comp. Ex. 1 | Comp. Ex. 2 | Comp. Ex. 3 | Comp. Ex. 4 | Comp. Ex. 5 | Comp. Ex. 6 | Comp. Ex. 7 |
|---|---|---|---|---|---|---|---|---|---|---|---|---|---|---|
| NR | 40 | 40 | 40 | 40 | 40 | 40 | 50 | 40 | 40 | 40 | 40 | 40 | 40 | 40 |
| BR | 60 | 60 | 60 | 60 | 60 | 60 | 50 | 60 | 60 | 60 | 60 | 60 | 60 | 60 |
| Carbon black | 5 | 5 | 5 | 5 | 5 | 5 | 5 | 5 | 5 | 5 | 5 | 5 | 5 | 5 |
| Silica | 60 | 60 | 60 | 60 | 60 | 60 | 60 | 60 | 60 | 60 | 60 | 60 | 60 | 60 |
| Silane coupling agent | 8 | 8 | 8 | 8 | 8 | 8 | 8 | 8 | 8 | 8 | 8 | 8 | 8 | 8 |
| Water-soluble fine particle 1 | 25 | 25 | 25 | 35 | - | - | 25 | 25 | 25 | 25 | - | - | - | - |
| Water-soluble fine particle 2 | - | - | - | - | 25 | - | - | - | - | - | - | - | - | - |
| Water-soluble fine particle 3 | - | - | - | - | - | 25 | - | - | - | - | - | - | - | - |
| Wax | 1 | 1 | 1 | 1 | 1 | 1 | 1 | 1 | 1 | 1 | 1 | 1 | 1 | 1 |
| Antioxidant | 2 | 2 | 2 | 2 | 2 | 2 | 2 | 2 | 2 | 2 | 2 | 2 | 2 | 2 |
| Oil | 40 | 40 | 40 | 40 | 40 | 40 | 40 | 20 | 40 | 20 | 20 | 40 | 40 | 20 |
| Resin (1) | 10 | - | - | - | 10 | 10 | 10 | 10 | - | - | 10 | 10 | - | - |
| Resin (2) | - | 10 | 20 | 20 | - | - | - | - | - | - | - | - | - | - |
| Stearic acid | 1 | 1 | 1 | 1 | 1 | 1 | 1 | 1 | 1 | 1 | 1 | 1 | 1 | 1 |
| Zinc oxide | 1.5 | 1.5 | 1.5 | 1.5 | 1.5 | 1.5 | 1.5 | 1.5 | 1.5 | 1.5 | 1.5 | 1.5 | 1.5 | 1.5 |
| Sulfur | 1 | 1 | 1 | 1 | 1 | 1 | 1 | 1 | 1 | 1 | 1 | 1 | 1 | 1 |
| Vulcanization accelerator | 2 | 2 | 2 | 2 | 2 | 2 | 2 | 2 | 2 | 2 | 2 | 2 | 2 | 2 |
| Low-temperature grip performance on ice | 110 | 112 | 115 | 115 | 110 | 110 | 110 | 100 | 98 | 95 | 100 | 102 | 102 | 95 |
| High-temperature grip performance on ice | 100 | 105 | 110 | 115 | 105 | 102 | 100 | 100 | 98 | 98 | 90 | 90 | 90 | 90 |
| Wet grip performance | 105 | 110 | 115 | 115 | 105 | 105 | 105 | 100 | 98 | 95 | 100 | 100 | 95 | 93 |

(continued)

| | Ex. 1 | Ex. 2 | Ex. 3 | Ex. 4 | Ex. 5 | Ex. 6 | Ex. 7 | Comp. Ex. 1 | Comp. Ex. 2 | Comp. Ex. 3 | Comp. Ex. 4 | Comp. Ex. 5 | Comp. Ex. 6 | Comp. Ex. 7 |
|---|---|---|---|---|---|---|---|---|---|---|---|---|---|---|
| Low-temperature grip performance on non-icy surfaces | 110 | 110 | 113 | 113 | 110 | 110 | 110 | 100 | 98 | 95 | 100 | 102 | 105 | 95 |
| Anti-snow sticking properties | 110 | 115 | 120 | 120 | 110 | 110 | 110 | 100 | 90 | 90 | 100 | 100 | 90 | 90 |

Table 1 shows that an excellent balance between low-temperature performance on ice, high-temperature performance on ice, and wet grip performance, and further an excellent balance between the foregoing properties, low-temperature grip performance on non-icy surfaces, and anti-snow sticking properties were achieved in the examples containing an isoprene-based rubber, BR, a resin (solid resin), a water-soluble fine particle, and a large amount of a liquid plasticizer.

In particular, comparisons of Comparative Example 7 (with no resin, no water-soluble fine particle, and a low oil content), Comparative Example 3 (with a water-soluble fine particle), Comparative Example 4 (with a resin), Comparative Example 6 (with a high oil content), and Example 1 (with a resin, a water-soluble fine particle, and a high oil content) demonstrated that combining addition of a resin (5 parts by mass or more), a liquid plasticizer content of more than 30 parts by mass, and addition of a water-soluble fine particle had the following effects: the balance between low-temperature performance on ice, high-temperature performance on ice, and wet grip performance, and further the balance between the foregoing properties, low-temperature grip performance on non-icy surfaces, and anti-snow sticking properties were synergistically improved.

[Table 2]

| | Ex. 11 | Ex. 12 | Ex. 13 | Comp. Ex. 11 |
|---|---|---|---|---|
| NR | 30 | 30 | 30 | 30 |
| BR | 70 | 70 | 70 | 70 |
| Carbon black | 10 | 10 | 10 | 10 |
| Silica | 60 | 60 | 60 | 60 |
| Silane coupling agent | 6 | 6 | 6 | 6 |
| Water-soluble fine particle 1 | 20 | - | - | - |
| Water-soluble fine particle 2 | - | 25 | - | - |
| Water-soluble fine particle 3 | - | - | 25 | - |
| Wax | 1 | 1 | 1 | 1 |
| Antioxidant | 2 | 2 | 2 | 2 |
| Oil | 35 | 35 | 35 | 35 |
| Resin (1) | 10 | 10 | 10 | 10 |
| Stearic acid | 1 | 1 | 1 | 1 |
| Zinc oxide | 1.5 | 1.5 | 1.5 | 1.5 |
| Sulfur | 1 | 1 | 1 | 1 |
| Vulcanization accelerator | 2 | 2 | 2 | 2 |
| Performance on ice | 110 | 112 | 115 | 100 |
| Pattern noise-reducing properties | 102 | 105 | 105 | 100 |
| Handling stability | 102 | 101 | 102 | 100 |

## Claims

**1.** A tread rubber composition for studless winter tires, comprising:

a rubber component including an isoprene-based rubber and a polybutadiene rubber;
a water-soluble fine particle;
a resin; and
a liquid plasticizer,
the resin being present in an amount of 5 parts by mass or more, the liquid plasticizer being present in an amount of more than 30 parts by mass, each per 100 parts by mass of the rubber component.

**2.** The tread rubber composition for studless winter tires according to claim 1,

wherein the isoprene-based rubber is present in an amount of 20% by mass or more, and the polybutadiene rubber is present in an amount of 20% by mass or more, each based on 100% by mass of the rubber component, and the tread rubber composition comprises silica in an amount of 50% by mass or more based on a total of 100% by mass of silica and carbon black.

**3.** The tread rubber composition for studless winter tires according to claim 1 or 2,
wherein the resin is at least one selected from the group consisting of C5 resins, C9 resins, limonene resins, α-pinene resins, β-pinene resins, terpene phenol resins, DCPD resins, styrene resins, α-methylstyrene resins, coumarone resins, indene resins, phenol resins, and rosin resins.

**4.** The tread rubber composition for studless winter tires according to any one of claims 1 to 3,
wherein the water-soluble fine particle is present in an amount of 25 parts by mass or more per 100 parts by mass of the rubber component.

**5.** The tread rubber composition for studless winter tires according to any one of claims 1 to 4,
wherein the polybutadiene rubber has a cis content of 90% by mass or higher.

**6.** A studless winter tire, comprising a tread formed from the rubber composition according to any one of claims 1 to 5.

**7.** The studless winter tire according to claim 6,
wherein the tread of the studless winter tire has a road contact surface with pores having an average diameter of 0.1 to 100 μm after the following running conditions:
(Running conditions)
The tire is mounted on each wheel of a vehicle (a front-engine, rear-wheel-drive vehicle of 2000 cc displacement made in Japan) and run 100 km on a dry road at ordinary temperature and then 4 km on a snowy or icy road at -10 to -1°C.

**8.** The studless winter tire according to claim 6 or 7,
wherein the studless winter tire has a rate of reduction in pattern noise from before to after the following running conditions, which is enhanced by 2 to 10% as compared with a studless winter tire comprising a tread formed from a rubber composition having the same formulation except for containing no water-soluble fine particle:
(Running conditions)
The tire is mounted on each wheel of a vehicle (a front-engine, rear-wheel-drive vehicle of 2000 cc displacement made in Japan) and run 100 km on a dry road at ordinary temperature and then 4 km on a snowy or icy road at -10 to -1°C.

## INTERNATIONAL SEARCH REPORT

International application No.
PCT/JP2018/046835

A. CLASSIFICATION OF SUBJECT MATTER
Int.Cl. C08L9/00(2006.01)i, B60C1/00(2006.01)i, C08K3/36(2006.01)i, C08L7/00(2006.01)i
According to International Patent Classification (IPC) or to both national classification and IPC

B. FIELDS SEARCHED
Minimum documentation searched (classification system followed by classification symbols)
Int.Cl. C08L9/00, B60C1/00, C08K3/36, C08L7/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2013-545835 A (COMPAGNIE GENERALE DES ETABLISSEMENTS MICHELIN) 26 December 2013, claims 1-20, paragraph [0001], claims C-2 & WO 2012/052331 A1 & EP 2629986 A1 & FR 2966157 A1 & CA 2813516 A1 | 1-8 |
| X | JP 2014-505757 A (COMPAGNIE GENERALE DES ETABLISSEMENTS MICHELIN) 06 March 2014, claims 1-22, paragraphs [0001], [0067], claims C-2 & WO 2012/085063 A1 & EP 2655089 A1 & FR 2969629 A1 & CA 2819910 A1 | 1-8 |
| X | JP 2017-537198 A (COMPAGNIE GENERALE DES ETABLISSEMENTS MICHELIN) 14 December 2017, claims 1-26, paragraph [0001], claims C-4 & WO 2016/084984 A1, claims 1-26, paragraph [0001], claims C-4 & EP 3224315 A1 & CA 2969106 A1 & CN 107001708 A | 1-8 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 04 March 2019 (04.03.2019) | 12 March 2019 (12.03.2019) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2009091482 A
- JP 2005053977 A
- JP 2002249619 A
- US 4414370 A
- JP S596207 A
- JP H558005 B
- JP H1313522 A
- US 5010166 A


### Non-patent literature cited in the description


- annual research report TREND. Toagosei Co., Ltd, 2000, vol. 3, 42-45